# DEMANDE DE BREVET EUROPEEN

(11) **EP 0 829 876 A1**
(43) Date de publication de la demande: **18.03.1998**
(21) Numéro de dépôt: 97402136.2
(22) Date de dépôt: 15.09.1997
(51) Int. Cl.: G11B 21/21

(54) **Patin de vol à plot central arrière en dépassement**

(30) Priorité: 17.09.1996 FR 9611311
(71) Demandeur: SILMAG, 38524 Saint-Egrève Cedex (FR)
(72) Inventeur: Lazzari, Jean-Pierre, 38700 Corenc (FR); Pisella, Christian, 38140 Rives sur Fure (FR); Tosi, Laurent, 38600 Fontaine (FR)
(74) Mandataire: Signore, Robert

(57) **Abrégé**

Selon l'invention, le plot central arrière (50) est en léger dépassement (h) par rapport à la surface de vol (43) des reliefs (42).

Application à l'enregistrement magnétique.

## Description

### Domaine technique

La présente invention a pour objet un patin de vol à plot central arrière en dépassement. Elle trouve une application dans l'enregistrement magnétique d'informations sur un support (disque par exemple).

### Etat de la technique antérieure

Le patin de vol de l'invention est du type à "pseudocontact". Le principe du vol à "pseudocontact" consiste à faire en sorte que la partie du patin qui comporte la tête ne touche le disque que sur des protubérances de la surface du disque. Pour que le pseudocontact fonctionne bien, il convient que la force d'appui exercé sur le disque par la partie du patin qui est la plus proche du disque et qui contient la tête d'écriture et/de lecture, soit très faible, afin que l'énergie dissipée lors du contact ne détériore ni la tête, ni le disque.

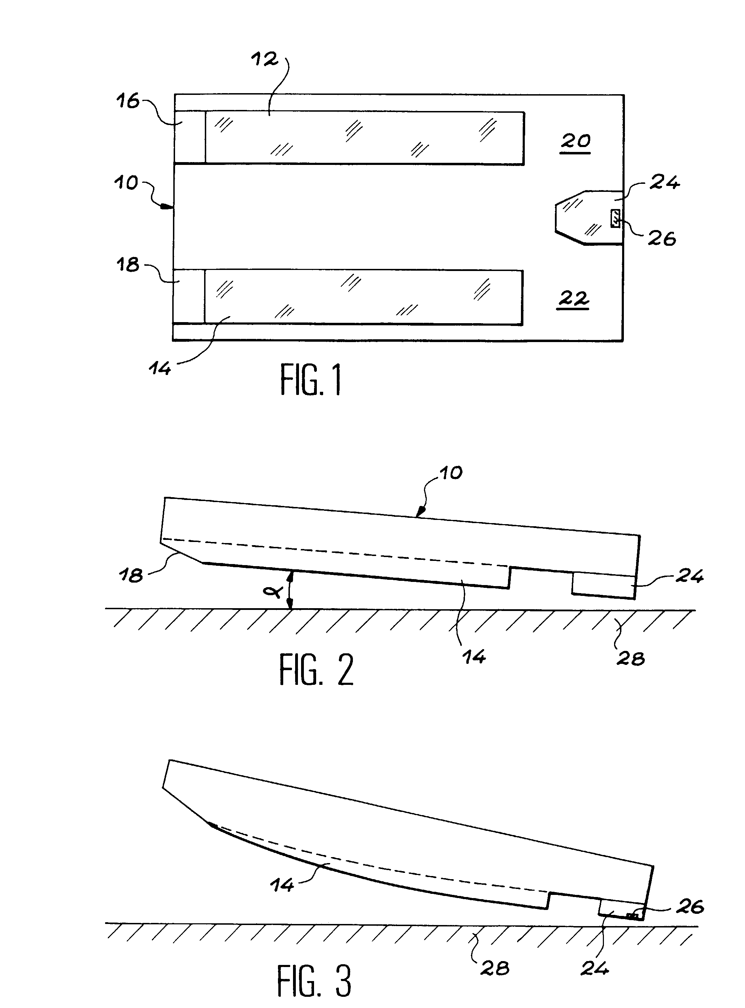

La solution généralement utilisée, avec quelques variantes, est représentée sur les figures 1 et 2 annexées.

La figure 1 montre, en vue de dessus, un patin 10 comportant deux reliefs 12, 14 (ou rails, ou skis) disposés le long des bords latéraux du patin, ces reliefs présentant un chanfrein 16, 18 sur leur bord avant. Ces reliefs sont plus courts que la longueur totale du patin, ce qui produit à l'arrière deux zones 20, 22 de dépression. A l'extrémité avant des reliefs, une surpression apparaît, qui crée une force portante s'opposant à la charge F1 d'un ressort (de quelques grammes) comme le montre la figure 2 en vue de côté.

A l'arrière du patin de vol et dans l'axe médian de celui-ci se trouve un plot 24 supportant une tête de lecture et/ou d'écriture 26.

Les formes et les surfaces des deux reliefs latéraux sont calculées pour que le patin vole au-dessus du disque 20 avec un angle d'attaque a appelé souvent "pitch". La dépression créée à l'arrière des deux reliefs tend à plaquer l'arrière du patin contre le disque, c'est-à-dire à mettre la tête 26 réalisée dans le plot central arrière 24 très près du disque. Un équilibre stable s'établit entre la force appliquée et la force de sustentation. Cet équilibre présente une certaine raideur. Par contre, le patin peut légèrement pivoter, autour du point où la force verticale F1 est appliquée, ce qui va modifier légèrement l'angle a, lorsque la tête rencontre une bosse sur le disque. La force nécessaire à cette rotation est très faible, de l'ordre d'une centaine de milligrammes, contre quelques grammes pour la raideur du vol des patins. C'est la base du fonctionnement des patins dit en "pseudocontact".

Il faut noter que le plot central arrière 24 ne contribue pas au vol du patin. En effet, sa surface est trop petite pour créer une surpression notable. Seuls les reliefs 12, 14 contribuent à ce vol. La surface de vol de ces skis est réalisée par des techniques de polissage. Ainsi, le plot central 24 comprenant la tête 26 a sa surface alignée par rapport à celle des deux reliefs.

Cette surface définit le plan de vol du patin où, plus généralement, la surface de vol, car la surface des reliefs n'est pas nécessairement plane. Sur la figure 3, on voit ainsi, en vue de côté, un patin de vol dont les reliefs 14 ont un profil 15 bombé.

Un patin de vol avec plot central arrière est décrit, par exemple, dans les documents US-A-5,223,998 et EP-A-518 566.

Un patin de vol avec profil bombé est décrit, par exemple, dans le document US-A-4,420,780.

Les patins de vol à profil bombé nécessitent un angle d'attaque beaucoup plus important que celui d'un patin normal. L'angle est deux à trois fois supérieur à celui d'un patin normal. La raison en est que si l'angle était égal à celui des patins normaux, alors, le point le plus bas de l'ensemble pourrait ne pas être la tête de lecture-écriture, selon les ondulations présentes à la surface du disque. Pour être bien certain que la tête est toujours au point le plus bas, on est obligé d'avoir un angle d'attaque élevé. Or l'homme du métier sait que la stabilité de vol d'un patin est très difficile à obtenir lorsque l'angle d'attaque est élevé. C'est une première difficulté avec les patins connus.

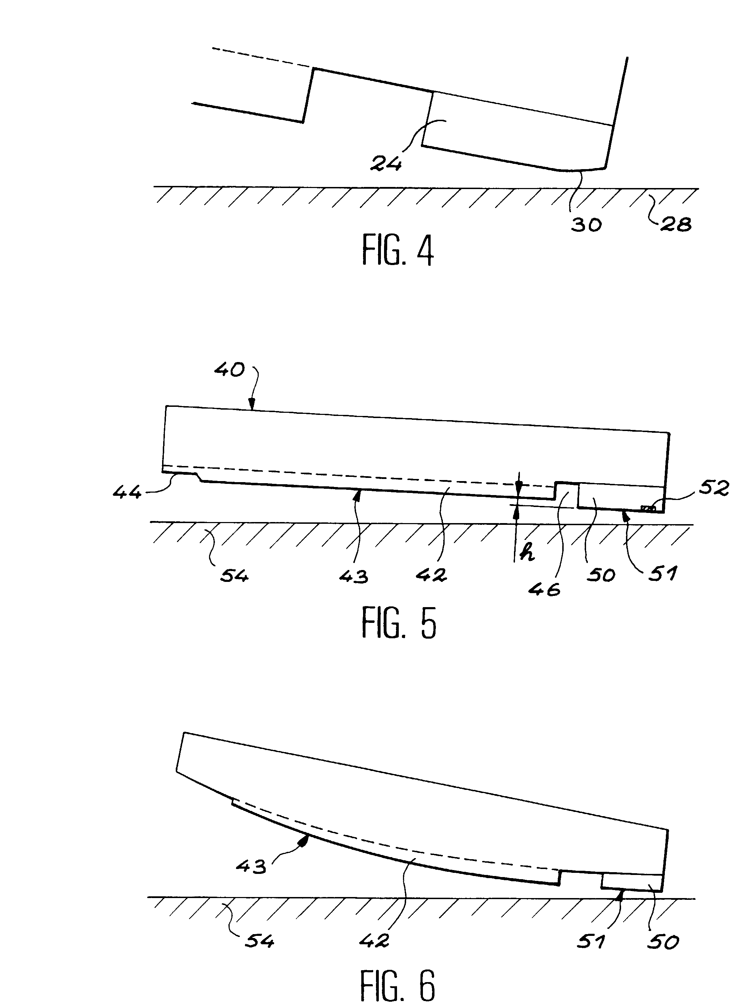

Une deuxième difficulté vient encore de ce que l'angle d'attaque est élevé, car on constate que l'angle fuyant du plot central s'use rapidement au contact du disque. C'est ce que montre la figure 4 où l'on voit le plot arrière central 24 et son angle fuyant 30 usé par le contact répété avec le disque 28.

La présente invention a justement pour but de remédier à ces inconvénients.

### Exposé de l'invention

A cette fin, l'invention propose un patin de vol dont le plot central est en léger dépassement par rapport à la surface de vol des reliefs. Par "léger dépassement", on entend un dépassement allant d'environ 10 nm (100 *Å*) à environ 100 nm (1000 *Å*).

Selon une autre caractéristique de l'invention, le plot central arrière présente une surface plane qui est sensiblement parallèle au support d'enregistrement lorsque le patin est en position de vol au-dessus de ce support.

La présente invention a également pour objet un procédé de réalisation d'un tel patin. Selon ce procédé, on commence par réaliser, par les opérations habituelles, un patin de vol avec deux reliefs latéraux et un plot central arrière et l'on met à niveau ces reliefs et ce plot central. Puis, selon une caractéristique de l'invention, on grave sélectivement les deux reliefs pour en abaisser la surface afin qu'elle se situe sous la surface du plot central.

### Brève description des dessins

- la figure 1, déjà décrite, montre, en vue de dessus, un patin de vol selon l'état de la technique ;
- la figure 2, déjà décrite, montre ce même patin en vue de côté ;
- la figure 3, déjà décrite, montre un patin de vol à surface de vol bombée ;
- la figure 4, déjà décrite, montre l'usure de l'angle fuyant du plot central ;
- la figure 5 montre, en coupe, un patin de vol selon l'invention ;
- la figure 6 montre, en coupe, une variante d'exécution à profil bombé.

### Exposé détaillé de modes de réalisation

On voit, sur la figure 5, un patin de vol 40 vu de côté avec un relief 42 pourvu, à son extrémité avant, d'un décrochement 44 (il pourrait tout aussi bien être muni d'un chanfrein), et, à son extrémité arrière, d'un décrochement 46. Un autre relief est naturellement situé le long de l'autre bord latéral, invisible sur la figure(une vue de dessus de ces reliefs serait conforme à celle de la figure 1). Le relief 42 présente un plan de vol 43. A l'arrière du patin se trouve un plot central 50, dont la particularité est de présenter une surface 51 qui est en léger dépassement par rapport au plan de vol 43 des reliefs. Ce dépassement est noté h sur la figure 5. Il est compris entre environ 10 nm (100 *Å*) et 100 nm (1000 *Å*). Le plot central 50 supporte une tête magnétique d'écriture et/ou de lecture 52. Cette tête peut être de tout type connu, notamment à couches minces avec deux pièces polaires séparées par un entrefer amagnétique. Le patin 40 vole au-dessus d'un support d'enregistrement 54, qui peut être un disque.

Dans un mode de réalisation avantageux, les reliefs présentent un profil bombé, comme illustré sur la figure 6. Sur cette figure, le relief 42 est toujours le seul visible. Il présente une surface 43 bombée, en forme, par exemple, de cylindre parabolique ou circulaire, ou de tout autre forme. Le plot central arrière 50 présente, lui, une surface 51 qui est plane et conçue pour être disposée parallèlement au support 54 lorsque le patin est en position de vol, comme c'est le cas sur la figure 6. On évite ainsi l'usure du bord arrière. Dans cette variante, le profil du patin est donc mixte : bombé pour les reliefs latéraux, plan pour le plot arrière.

Le procédé de fabrication du patin de l'invention commence par la réalisation d'un patin traditionnel, avec deux reliefs latéraux et un plot central arrière. On planarise le tout par rapport à la surface des reliefs. On réalise ensuite un niveau de masquage qui protège le plot central, et l'on effectue une gravure des reliefs d'une profondeur égale au dépassement souhaité pour le plot central arrière. Les technologies actuelles permettent un contrôle très précis de cette profondeur de gravure. On dépose enfin une couche de protection, comme dans le procédé classique.

## Revendications

1. Patin de vol comportant deux reliefs latéraux (12, 14) dont la surface définit une surface de vol par rapport à un support d'enregistrement (54), et un plot central (24) situé à l'arrière du patin, ce plot central arrière (24) étant solidaire du patin et comprenant une tête d'écriture et/ou de lecture (26), ce patin de vol étant caractérisé en ce que le plot central arrière (50) est en dépassement (h) par rapport à la surface de vol (43) définie par les reliefs (42).

2. Patin de vol selon la revendication 1, dans lequel le dépassement (h) est compris entre environ 10 et 100 nm.

3. Patin de vol selon la revendication 1, dans lequel les reliefs latéraux (42) présentent une surface de vol bombée (43).

4. Patin de vol selon la revendication 3, dans lequel le plot central arrière (50) présente une surface plane (51) qui est sensiblement parallèle au support d'enregistrement (54) lorsque le patin est en position au-dessus dudit support (54).

5. Procédé de réalisation d'un patin de vol conforme à la revendication 1, dans lequel on réalise deux reliefs latéraux (12, 14) et un plot central (24) situé à l'arrière du patin et une tête magnétique d'écriture et/ou de lecture (26) à la surface de ce plot central (24), caractérisé par le fait que l'on met à niveau les reliefs et le plot central, puis on grave sélectivement les reliefs pour en abaisser la surface (43) sous la surface (51) du plot arrière central (50).
